# EUROPEAN PATENT SPECIFICATION

(11) **EP 3 943 323 B1**
(45) Date of publication and mention of the grant of the patent: **12.07.2023**
(21) Application number: 20773938.4
(22) Date of filing: 12.03.2020
(51) Int. Cl.: B60H 1/00, B60H 1/24, B60H 1/34, B60K 37/02

(54) **AIR OUTLET DEVICE AND AIR OUTLET METHOD FOR AN AIR CONDITIONING SYSTEM OF A VEHICLE**
LUFTAUSLASSVORRICHTUNG UND LUFTAUSLASSVERFAHREN FÜR EINE KLIMAANLAGE EINES FAHRZEUGS
DISPOSITIF DE SORTIE D'AIR ET PROCÉDÉ DE SORTIE D'AIR POUR UN SYSTÈME DE CLIMATISATION D'UN VÉHICULE

(30) Priority: 20.03.2019 CN 201910213924
(43) Date of publication of application: 26.01.2022
(73) Proprietor: BYD Company Limited, Shenzhen, Guangdong 518118 (CN)
(72) Inventor: HUANG, Hua, Shenzhen, Guangdong 518118 (CN); LIANG, Qun, Shenzhen, Guangdong 518118 (CN); CHEN, Xianbing, Shenzhen, Guangdong 518118 (CN)
(74) Representative: Arnold & Siedsma
(86) International application number: PCT/CN2020/079043
(87) International publication number: WO 2020/187130

(56) References cited:
- WO-A1-2018/095288
- DE-U1-202014 007 673
- US-A1- 2017 291 469
- US-A1- 2018 141 405

## Description

### FIELD

The present invention relates to an air outlet device for an air-conditioning system of a vehicle, a vehicle, and an air outlet method for an air-conditioning system of a vehicle.

### BACKGROUND

In the related art, a technology of controlling air outlet states of air vents by rotating an in-vehicle display screen is provided. However, this technology is only applicable to a single display screen. Air vents need to be disposed around an in-vehicle display terminal, and the air outlet effect cannot be achieved in a case that there are a plurality of screens. The in-vehicle display screen has a development trend of large-screen and multi-screen. When air vents of an air outlet assembly are blocked, flow direction transmission of airflow cannot be implemented.

US 2017/0291469 A1 discloses a ventilation register control system provided for a motor vehicle. That ventilation register control system includes four ventilation registers and a control module configured to independently open and close each ventilation register.

US 2018/0141405 A1 discloses an air handling system for a vehicle comprising a conditioning section for controlling a temperature of a flow of air, a mixing section disposed downstream of the conditioning section with respect to a direction of the flow of the air, and a delivery section disposed downstream of the mixing section with respect to the direction of the flow of the air.

### SUMMARY

The present invention is to at least resolve one of the technical problems in the related art to some extent.

Therefore, a first objective of the present invention is to provide an air outlet device for an air-conditioning system of a vehicle, to control an airflow direction by controlling opening and closing states of an air outlet assembly, thereby preventing airflow from being blocked, and satisfying the comfort of passengers.

A second objective of the present invention is to provide a vehicle including the foregoing air outlet device.

A third objective of the present invention is to provide an air outlet method for an air-conditioning system of a vehicle.

To achieve the foregoing purpose, a first aspect of the present invention provides an air outlet device for an air-conditioning system of a vehicle, as defined in independent claim 1.

According to the air outlet device for an air-conditioning system of a vehicle provided in an embodiment of the present invention, the control unit is connected to the plurality of driving components. By controlling the plurality of driving components to drive the plurality of first air doors to open or close independently, the opening and closing states of the air outlet assembly can be controlled, so as to control an airflow direction, thereby preventing airflow from being blocked, and satisfying the comfort of passengers.

In addition, the air outlet device for an air-conditioning system of a vehicle according to the foregoing embodiment of the present invention may further include the following additional technical features:
According to an embodiment of the present invention, the control unit is further configured to control first air doors among the plurality of first air doors in the blocked region and first air doors among the plurality of first air doors in the unblocked region to open, and control a corresponding in-vehicle display terminal in the blocked region to rotate, to change an air outlet direction.

According to an embodiment of the present invention, the control unit is further configured to receive a user instruction, and control at least one of the first air doors in the blocked region to open according to the user instruction.

According to an embodiment of the present invention, the air outlet device further includes: a baffle configured to be disposed in an air duct of the air-conditioning system and to be disposed along a flow direction of air in the air duct, to divide the air duct into a plurality of partitioned air ducts; and a plurality of second air doors configured to be disposed between an evaporator and a warm box of the air-conditioning system, the evaporator is configured to generate cold air, and the warm box is configured to generate warm air, the plurality of second air doors being configured to be respectively disposed in the plurality of partitioned air ducts, and each of the second air doors being configured to control a flow rate of cold air in the corresponding partitioned air duct. The control unit is configured to control opening degrees of the plurality of second air doors.

According to an embodiment of the present invention, each partitioned air duct is configured to correspond to first air doors in a certain region. In a case that the unblocked region is one of a plurality of unblocked regions of the air outlet assembly, the control unit is further configured to obtain a target air outlet temperature of each of the unblocked regions, and control the opening degree of the second air door in the partitioned air duct corresponding to each of the unblocked regions according to the target air outlet temperature of each of the unblocked regions.

According to an embodiment of the present invention, the driving component includes: a gear, the gear being connected to the first air door to drive the first air door to move; a rack, the rack cooperating with the gear to drive the gear to rotate; and a motor, the motor being connected to the rack, and being configured to drive the rack under the control of the control unit.

To achieve the foregoing purpose, a second aspect of the present invention provides a vehicle, including the foregoing air outlet device for an air-conditioning system of a vehicle.

The vehicle according to an embodiment of the present invention can control the airflow direction by using the foregoing air outlet device for an air-conditioning system of a vehicle, thereby preventing the airflow from being blocked, and satisfying the comfort of passengers.

To achieve the foregoing purpose, a third aspect of the present invention provides an air outlet method for an air-conditioning system of a vehicle, as defined in independent claim 7.

By using the air outlet method for an air-conditioning system of a vehicle according to an embodiment of the present invention, the plurality of driving components are controlled to drive the plurality of first air doors to open or close independently, so as to control the airflow direction, thereby preventing the airflow from being blocked, and satisfying the comfort of passengers.

In addition, the air outlet method for an air-conditioning system of a vehicle according to the foregoing embodiment of the present invention may further include the following additional technical features:
According to an embodiment of the present invention, the controlling the plurality of driving components according to the positions of the plurality of in-vehicle display terminals and rotation states of the plurality of in-vehicle display terminals includes: controlling first air doors among the plurality of first air doors in the blocked region and first air doors among the plurality of first air doors in the unblocked region to open, and controlling a corresponding in-vehicle display terminal in the blocked region to rotate, to change an air outlet direction.

According to an embodiment of the present invention, the foregoing air outlet method for an air-conditioning system of a vehicle further includes: receiving a user instruction, and controlling at least one of the first air doors in the blocked region to open according to the user instruction.

According to an embodiment of the present invention, the air-conditioning system includes an air duct, an evaporator, and a warm box. The evaporator is configured to generate cold air. The warm box is configured to generate warm air. A baffle is disposed in the air duct, and is disposed along a flow direction of air in the air duct, to divide the air duct into a plurality of partitioned air ducts. A plurality of second air doors are disposed between the evaporator and the warm box. The plurality of second air doors are respectively disposed in the plurality of partitioned air ducts. Each of the second air doors is configured to control a flow rate of cold air in the corresponding partitioned air duct. The air outlet method further includes: controlling opening degrees of the plurality of second air doors.

According to an embodiment of the present invention, each partitioned air duct corresponds to first air doors in a certain region. In a case that the unblocked region is one of a plurality unblocked regions of the air outlet assembly, the controlling opening degrees of the plurality of second air doors includes: obtaining a target air outlet temperature of each of the unblocked regions; and controlling the opening degree of the second air door in the partitioned air duct corresponding to each of the unblocked regions according to the target air outlet temperature of each of the unblocked regions.

Additional aspects and advantages of the present invention will be provided in the following description, some of which will become apparent from the following description or may be learned from practices of the present invention.

### BRIEF DESCRIPTION OF THE DRAWINGS

The foregoing and/or additional aspects and advantages of the present invention will become apparent and comprehensible in the description made with reference to the following accompanying drawings, where:
FIG. 1 is a schematic block diagram of an air outlet device for an air-conditioning system of a vehicle according to some embodiments of the present invention;
FIG. 2 is a schematic diagram of an air outlet assembly of an air outlet device for an air-conditioning system of a vehicle, according to some embodiments of the present invention;
FIG. 3 is a schematic block diagram of an air outlet device for an air-conditioning system of a vehicle according to some embodiments of the present invention;
FIG. 4 is a schematic diagram of a plurality of in-vehicle display terminals and a guide rail;
FIG. 5 is a combined view of a plurality of in-vehicle display terminals and an air outlet assembly of an air outlet device for an air-conditioning system of a vehicle, according to some embodiments of the present invention;
FIG. 6 is a combined view of a plurality of in-vehicle display terminals and an air outlet assembly of an air outlet device for an air-conditioning system of a vehicle, according to some embodiments of the present invention;
FIG. 7 is a combined view of a plurality of in-vehicle display terminals and an air outlet assembly of an air outlet device for an air-conditioning system of a vehicle, according to some embodiments of the present invention;
FIG. 8 is a schematic diagram of rotation of an in-vehicle display terminal;
FIG. 9 is a schematic principle diagram of a regional temperature difference of an air-conditioning system;
FIG. 10 is a schematic block diagram of a vehicle according to an embodiment of the present invention; and
FIG. 11 is a flowchart of an air outlet method for an air-conditioning system of a vehicle according to an embodiment of the present invention.

### DETAILED DESCRIPTION

The embodiments of the present invention are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present invention and cannot be construed as a limitation to the present invention.

A method and an apparatus of the embodiments of the present invention are described below with reference to the accompanying drawings.

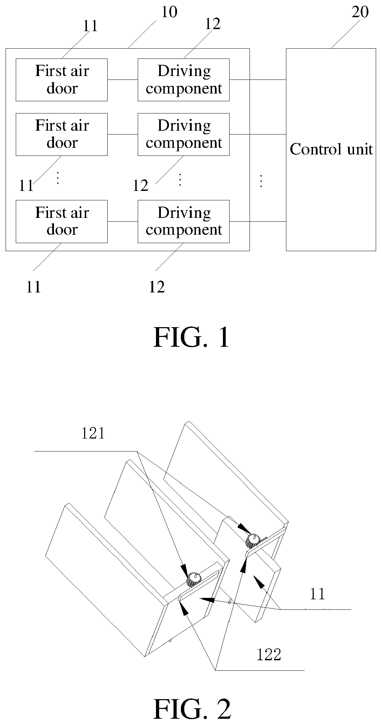

FIG. 1 is a schematic block diagram of an air outlet device for an air-conditioning system of a vehicle according to some embodiments of the present invention.

As shown in FIG. 1, the air outlet device for an air-conditioning system of a vehicle according to some embodiments of the present invention includes: an air outlet assembly 10 disposed at air vents of the air-conditioning system and a control unit 20.

The air outlet assembly 10 includes a plurality of first air doors 11 and a plurality of driving components 12. The plurality of driving components 12 are respectively connected to the plurality of first air doors 11. Each driving component 12 is configured to drive the corresponding first air door 11. The control unit 20 is connected to the plurality of driving components 12. The control unit 20 is configured to control the plurality of driving components 12 to drive the plurality of first air doors 11 to open or close independently.

According to an embodiment of the present invention, as shown in FIG. 2, each driving component 12 may include: a gear 121, a rack 122, and a motor (not specifically shown in the figure). The gear 121 is connected to the corresponding first air door 11, to drive the first air door 11 to move. The rack 122 cooperates with the gear 121 to drive the gear 121 to rotate. The motor is connected to the rack 122, and is configured to drive the rack 122 under the control of the control unit 20. The air outlet assembly 10 is installed behind in-vehicle display terminals, such as being installed on a dashboard. The air outlet assembly 10 may have a structure extending left and right, and may be adaptively extended and contracted according to a quantity of the in-vehicle display terminals.

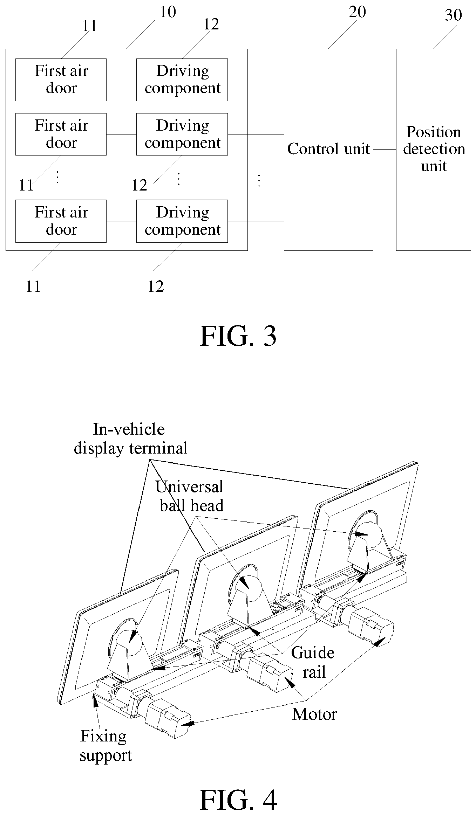

Therefore, by using the air outlet device for the present invention, the plurality of first air doors are controlled to open or close independently, thereby saving energy while ensuring that the air vents are not blocked. According to some embodiments of the present invention, as shown in FIG. 3, the foregoing air outlet device for an air-conditioning system of a vehicle further includes: a position detection unit 30, configured to detect positions of a plurality of in-vehicle display terminals of the vehicle. The plurality of in-vehicle display terminals are disposed in front of the air outlet assembly 10. The control unit 20 controls the plurality of driving components 12 according to the positions of the plurality of in-vehicle display terminals and/or rotation states of the plurality of in-vehicle display terminals.

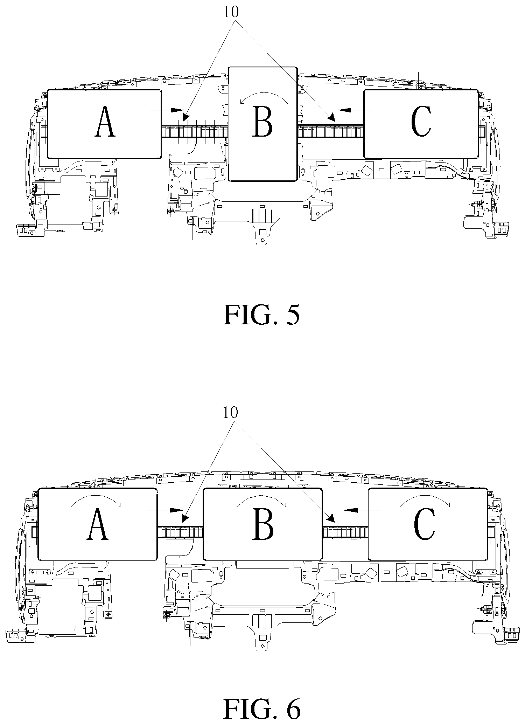

In other words, according to the positions of the plurality of in-vehicle display terminals, the plurality of driving components 12 drive the plurality of first air doors 11 to open or close independently. For example, as shown in FIG. 5, according to a position of an in-vehicle display terminal A, a plurality of driving components drive a plurality of first air doors in a region blocked by the in-vehicle display terminal to close. According to the rotation states of the plurality of in-vehicle display terminals, the plurality of driving components 12 drive the plurality of first air doors to open or close independently. For example, as shown in FIG. 5, rotation states of the in-vehicle display terminal A, an in-vehicle display terminal B, and an in-vehicle display terminal C are different, and quantities of first air doors that are blocked by the in-vehicle display terminals A, B, and C are also different. In this case, the control unit 20 controls a plurality of driving components in regions blocked by the in-vehicle display terminals A, B, and C to drive a plurality of corresponding first air doors to close, and controls a plurality of driving components outside the regions blocked by the in-vehicle display terminals A, B, and C to drive a plurality of corresponding first air doors to open, thereby achieving the air outlet effect and saving energy. The plurality of driving components are further controlled according to the positions of the plurality of in-vehicle display terminals and the rotation states of plurality of in-vehicle display terminals, to realize more precise control.

According to an embodiment of the present invention, the control unit 20 is further configured to determine a blocked region and an unblocked region of the air outlet assembly 10 according to the positions of the plurality of in-vehicle display terminals and the rotation states of the plurality of in-vehicle display terminals, and control first air doors 11 in the blocked region to close and first air doors 11 in the unblocked region to open. The blocked region is an air outlet region of the air outlet assembly that is blocked by the in-vehicle display terminal, that is, a region from which the air outlet assembly cannot let out air. The unblocked region is an air outlet region of the air outlet assembly that is not blocked by the in-vehicle display terminal, that is, a region from which the air outlet assembly can normally let out air.

In other words, all the first air doors 11 in the blocked region are controlled to be closed, which can save energy; and all the first air doors in the unblocked region are controlled to be open, which can satisfy a requirement for temperature adjustment of a driver. In addition, in a case that the driver has a heating requirement, closing all the first air doors 11 in the blocked region can effectively avoid the continuous temperature rise in the blocked region, and equipment aging or safety hazards due to the temperature rise for a long time.

It should be noted that, in a case that a part of a certain first air door in the plurality of first air doors is blocked by an in-vehicle display terminal, an air outlet region where the certain first air door is located also belongs to the blocked region. In this case, the first air door is controlled to be closed.

Specifically, as shown in FIG. 4, the in-vehicle display terminals are connected to universal ball heads for rotation, so as to change display directions of the in-vehicle display terminals. In addition, the in-vehicle display terminals slide left and right on a guide rail driven by drive motors of the in-vehicle display terminals, to change the positions of the in-vehicle display terminals. In this way, the in-vehicle display terminals may be spliced together to form a large display screen, or may be combined into different forms. For example, as shown in FIG. 5 and FIG. 6, A, B, and C represent the in-vehicle display terminals, and arrow directions represent movement directions and rotation directions of the in-vehicle display terminals. It is assumed that sizes of the in-vehicle display terminals A, B, and C are all 20 cm * 15 cm (length * width), a large display screen of 60 cm * 15 cm may be obtained by splicing as shown in FIG. 5, and a large display screen of 45 cm * 20 cm may be obtained by splicing as shown in FIG. 6.

It may be understood that, FIG. 5 FIG. 6 merely illustrate some embodiments of the present invention. The present invention includes but is not limited to three in-vehicle display terminals, and may alternatively include two or four in-vehicle display terminals, or the like.

A laser sensor is disposed in the air outlet assembly 10. The laser sensor is configured to detect position information of the in-vehicle display terminals according to a distance setting, and transmit the position information to the control unit 20 through a controller area network (CAN) signal. The control unit 20 (for example, the control unit 20 may be a micro controller unit (MCU)) drives, according to received position information, the motors to control the first air doors 11 to open or close. For example, in a case that the position of the in-vehicle display terminal A blocks the corresponding first air doors 11, the control unit 20 controls the air doors corresponding to the position to close and the first air doors 11 corresponding to the unblocked regions to open.

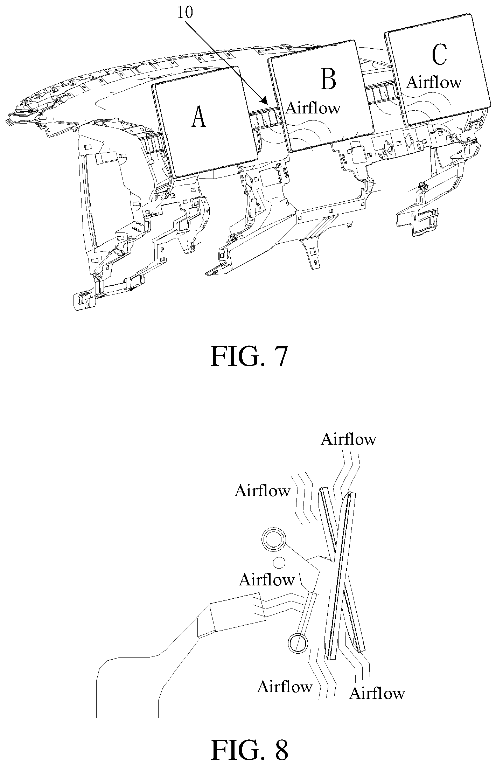

In other words, as shown in FIG. 7, as a position of an in-vehicle display terminal moves, the position detection unit 30 (for example, the laser sensor) acquires the position of the in-vehicle display terminal. According to the position of the in-vehicle display terminal, the control unit 20 controls the opening and closing states of the air vents at different positions. The quantities of the air vents that are blocked are different when the in-vehicle display terminal is in a landscape state and a portrait state. In a case that the position detection unit 30 acquires a position change, the quantities of the opening and closing states of the plurality of first air doors may also change correspondingly. Therefore, the air doors that are blocked by the positions of the in-vehicle display terminals can be closed, and the air doors in the regions that are not blocked by the in-vehicle display terminals can be opened, so as to prevent airflow from being blocked by the in-vehicle display terminals. In this way, air can flow out from the unblocked regions, to maximize the energy of the airflow, thereby realizing energy conservation and environmental protection.

According to some embodiments of the present invention, the control unit 20 is further configured to determine a blocked region and an unblocked region of the air outlet assembly 10 according to the positions of the plurality of in-vehicle display terminals and the rotation states of the plurality of in-vehicle display terminals, control all first air doors 11 in the blocked region and the unblocked region to open, and control the corresponding in-vehicle display terminal in the blocked region to rotate, so as to change an air outlet direction.

According to some embodiments of the present invention, the control unit 20 is further configured to receive a user instruction, and control at least one of the first air doors 11 in the blocked region to open according to the user instruction.

Specifically, as shown in FIG. 8, in a case that an in-vehicle display terminal blocks first air doors, in order to dissipate heat from the in-vehicle display terminal, a temperature sensor (not shown in the figure) may be disposed on the in-vehicle display terminal to detect a temperature of the in-vehicle display terminal, and feed back a high-temperature region of the in-vehicle display terminal to the control unit 20. The control unit 20 may further control at least one of first air doors 11 corresponding to the high-temperature region of the in-vehicle display terminal in the blocked region to open, so as to dissipate heat from the in-vehicle display terminal; and control the universal ball head to rotate the in-vehicle display terminal, so as to change the air outlet direction of the first air door 11, thereby blowing air into the vehicle while dissipating heat from the in-vehicle display terminal. Blowing cold air can dissipate heat from the plurality of in-vehicle display terminals.

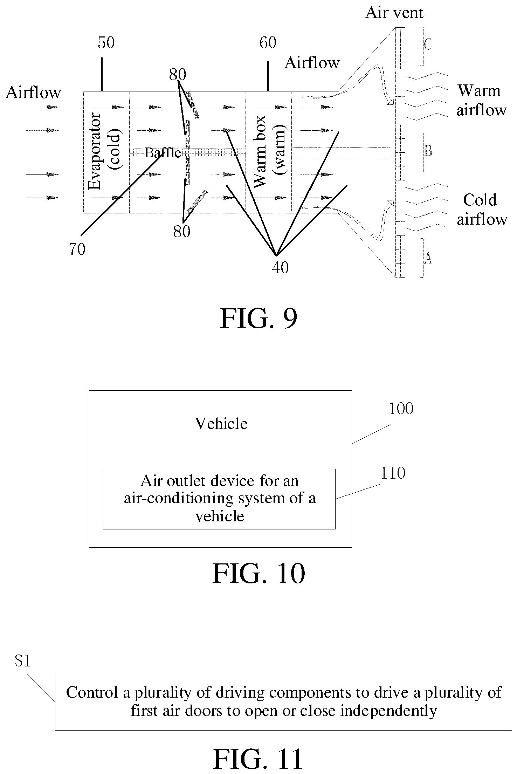

According to some embodiments of the present invention, as shown in FIG. 9, the air-conditioning system may include an air duct 40, an evaporator 50, and a warm box 60. The evaporator 50 is configured to generate cold air. The warm box 60 is configured to generate warm air. The air outlet device 110 may further include: a baffle 70 disposed in the air duct 40, the baffle 70 being disposed along a flow direction of air in the air duct 40, to separate the air duct 40 into a plurality of partitioned air ducts (the plurality of partitioned air duct divide the air duct into a plurality of regions); and a plurality of second air doors 80 disposed between the evaporator and the warm box, the plurality of second air doors 80 being correspondingly disposed in the plurality of partitioned air ducts respectively, and each second air door being configured to control a flow rate of cold air in the corresponding partitioned air duct. The control unit 20 is configured to control opening degrees of the plurality of second air doors. Each partitioned air duct corresponds to first air doors in a certain region. For example, as shown in FIG. 9, the partitioned air duct in the upper part of the figure corresponds to controlling a plurality of first air doors in the unblocked region to open, to blow out warm airflow; and the partitioned air duct in the lower part of the figure corresponds to controlling a plurality of first air doors in the unblocked region to open, to blow out cold airflow. It may be understood that, the upper part shown in FIG. 9 may also blow out cold airflow, and the lower part may also blow out warm airflow, which may be defined according to actual requirements.

It should be noted that, the second air doors are rotatable or movable.

According to some embodiments of the present invention, in a case that there are plural unblocked regions of the air outlet assembly, the control unit 20 is further configured to obtain a target air outlet temperature of each unblocked region, and control the opening degree of the second air door in the partitioned air duct corresponding to each unblocked region according to the target air outlet temperature of each unblocked region.

Specifically, as shown in FIG. 9, the present invention can further implement different air outlet temperatures in different air outlet regions. The airflow enters the partitioned air ducts through the isolated evaporator and the warm box with the baffle, and then flows out of the air outlet assembly. The second air doors (air vent open-and-close units) are disposed between the evaporator and the warm box. An opening and closing amount of each second air door is controlled to implement cooling and heating control. For example, in a case that the target outlet temperature between the in-vehicle display terminals B and C is detected to be high, the control unit 20 may increase an opening degree of a corresponding second air door to increase a flow rate of cold airflow flowing through, so as to increase a flow rate of cold airflow entering the warm box and reduce a temperature of warm airflow flowing out of the warm box, thereby reducing the target air outlet temperature. In a case that the target outlet temperature between the in-vehicle display terminals A and B is detected to be high, the control unit 20 may increase an opening degree of a corresponding second air door to increase a flow rate of cold airflow flowing through, so as to increase a flow rate of cold airflow entering the warm box and reduce a temperature of warm airflow flowing out of the warm box, thereby reducing the target air outlet temperature. In this way, different air vents blow out airflow with different temperatures. Specifically, in a case that a temperature of a region facing the in-vehicle display terminal is 20°C while a required temperature of a driver is 23°C, the opening degree of the second air door may be adjusted to satisfy the requirement of the driver.

In conclusion, in the air outlet device for an air-conditioning system of a vehicle provided in the present invention, the opening and closing states of the air outlet assembly can be controlled through movement of the in-vehicle display terminals, to control the airflow direction, thereby preventing the airflow from being blocked. The airflow is controlled to dissipate heat from the in-vehicle display terminals. The direction of the airflow is guided through the in-vehicle display terminals, to satisfy the comfort of passengers.

Based on the above, according to the air outlet device for an air-conditioning system of a vehicle provided in some embodiments of the present invention, the control unit is connected to the plurality of driving components. By controlling the plurality of driving components to drive the plurality of first air doors to open or close independently, the opening and closing states of the air outlet assembly can be controlled, so as to control an airflow direction, thereby preventing airflow from being blocked, and satisfying the comfort of passengers.

FIG. 10 is a schematic block diagram of a vehicle according to an embodiment of the present invention.

As shown in FIG. 10, the vehicle 100 according to an embodiment of the present invention includes: the foregoing air outlet device 110 of an air-conditioning system of a vehicle.

The vehicle according to an embodiment of the present invention can control the airflow direction by using the foregoing air outlet device for an air-conditioning system of a vehicle, thereby preventing the airflow from being blocked, and satisfying the comfort of passengers.

According to the foregoing embodiments, the present invention further provides an air outlet method for an air-conditioning system of a vehicle.

In an embodiment of the present invention, an air outlet assembly is disposed at air vents of the air-conditioning system. The air outlet assembly includes a plurality of first air doors and a plurality of driving components. The plurality of driving components are respectively connected to the plurality of first air doors. Each driving component is configured to drive the corresponding first air door.

FIG. 11 is a flowchart of an air outlet method for an air-conditioning system of a vehicle according to an embodiment of the present invention.

As shown in FIG. 11, the air outlet method for an air-conditioning system of a vehicle according to an embodiment of the present invention includes the following step: S1. Control a plurality of driving components to drive a plurality of first air doors to open or close independently.

It should be noted that reference is made to the details disclosed in the air outlet device for an air-conditioning system of a vehicle according to the embodiments of the present invention for details that are not disclosed in the air outlet method for an air-conditioning system of a vehicle according to the embodiments of the present invention, and no repeated description is provided herein.

By using the air outlet method for an air-conditioning system of a vehicle according to an embodiment of the present invention, the plurality of driving components are controlled to drive the plurality of first air doors to open or close independently, so as to control the airflow direction, thereby preventing the airflow from being blocked, and satisfying the comfort of passengers.

In the description of this specification, the description of the reference terms such as "an embodiment", "some embodiments", "example", "specific example", or "some examples" means that the specific features, structures, materials or characteristics described with reference to the embodiment or example are included in at least one embodiment or example of the present invention. In the present specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in the present specification, as well as features of different embodiments or examples, may be integrated and combined by those skilled in the art without contradicting each other.

In addition, terms "first" and "second" are used merely for the purpose of description, and shall not be construed as indicating or implying relative importance or implying a quantity of indicated technical features. Therefore, features defining "first" and "second" can explicitly or implicitly include at least one of the features. In the descriptions of the present invention, unless explicitly specified, "multiple" means at least two, for example, two or three.

Any process or method description in the flowchart or described in other ways herein can be understood as a module, segment or part of a code that includes one or more executable instructions for implementing customized logic functions or steps of the process, and the scopes of the preferred embodiments of the present invention include additional implementations, which may not be in the order shown or discussed, including performing functions in a substantially simultaneous manner or in reverse order according to the functions involved. This should be understood by a person skilled in the art to which the embodiments of the present invention belong.

The logic and/or steps shown in the flowcharts or described in any other manner herein, for example, a sequenced list that may be considered as executable instructions used for implementing logical functions, may be specifically implemented in any computer readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of the present invention, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present invention can be implemented by using hardware, software, firmware, or a combination thereof. In the foregoing implementations, a plurality of steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit of a logic gate circuit for realizing a logic function for a data signal, an application-specific integrated circuit having a suitable combined logic gate circuit, a programmable gate array (PGA), and a field programmable gate array (FPGA).

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, the functional modules in the embodiments of the present invention may be integrated into one processing module, or each of the units may exist alone physically, or two or more units may be integrated into one module. The integrated module may be implemented in the form of hardware, or may be implemented in a form of a software functional module. If implemented in the form of software functional modules and sold or used as an independent product, the integrated module may also be stored in a computer-readable storage medium.

The storage medium mentioned above may be a read-only memory, a magnetic disk, an optical disc, or the like. Although the embodiments of the present invention have been shown and described above, it can be understood that, the foregoing embodiments are exemplary and should not be understood as limitation to the present invention. A person of ordinary skill in the art can make changes, modifications, replacements, or variations to the foregoing embodiments within the scope of the invention as defined in the appended claims.

## Claims

1. An air outlet device (110) for an air-conditioning system of a vehicle (100), comprising:
an air outlet assembly (10) configured to be disposed at air vents of the air-conditioning system, the air outlet assembly (10) comprising a plurality of first air doors (11) and a plurality of 5 driving components (12), the plurality of driving components (12) being respectively connected to the plurality of first air doors (11), and each of the driving components (12) being configured to drive a corresponding first air door (11);
a control unit (20), the control unit (20) being connected to the plurality of driving components (12), and being configured to control the plurality of driving components (12) to drive the plurality of first air doors (11) to open or close independently;
**characterized in that** the air outlet device (110) further comprises:
a position detection unit (30), the position detection unit (30) being configured to detect positions of a plurality of in-vehicle display terminals (A, B, C) of the vehicle (100), the plurality of in-vehicle display terminals (A, B, C) being configured to be disposed in front of the air outlet assembly (10),
**in that** the control unit (20) is configured to control the plurality of driving components (12) according to the positions of the plurality of in-vehicle display terminals (A, B, C) and rotation states of the plurality of in-vehicle display terminals (A, B, C); and
**in that** the control unit (20) is further configured to determine a blocked region of the air outlet assembly (10), wherein the blocked region is an air outlet region of the air outlet assembly (10) that is blocked by an in-vehicle display terminal (A, B, C), from which the air outlet assembly (10) cannot let out air and an unblocked region of the air outlet assembly (10), wherein the unblocked region is an air outlet region of the air outlet assembly (10) that is not blocked by an in-vehicle display terminal (A, B, C), from which the air outlet assembly (10) can let out air according to the positions of the plurality of in-vehicle display terminals (A, B, C) and the rotation states of the plurality of in-vehicle display terminals (A, B, C), and control first air doors among the plurality of first air doors (11) in the blocked region to close and first air doors among the plurality of first air doors (11) in the unblocked region to open.

2. The air outlet device (110) for an air-conditioning system of a vehicle (100), according to claim 1, wherein the control unit (20) is further configured to control first air doors among the plurality of first air doors (11) in the blocked region and first air doors among the plurality of first air doors (11) in the unblocked region to open, and control a corresponding in-vehicle display terminal among the plurality of in-vehicle display terminals (A, B, C) in the blocked region to rotate, to change an air outlet direction.

3. The air outlet device (110) for an air-conditioning system of a vehicle (100), according to claim 1 or 2, wherein the control unit (20) is further configured to receive a user instruction, and control at least one of the first air doors (11) in the blocked region to open according to the user instruction.

4. The air outlet device (110) for an air-conditioning system of a vehicle (100), according to any one of the previous claims, further comprising:
a baffle (70) configured to be disposed in an air duct (40) of the air-conditioning system, the baffle (70) being configured to be disposed along a flow direction of air in the air duct (40), to divide the air duct (40) into a plurality of partitioned air ducts; and
a plurality of second air doors (80) configured to be disposed between an evaporator (50) and a warm box (60) of the air-conditioning system, the evaporator (50) is configured to generate cold air, and the warm box (60) is configured to generate warm air, the plurality of second air doors (80) being configured to be respectively disposed in the plurality of partitioned air ducts, and each of the second air doors (80) being configured to control a flow rate of cold air in the corresponding partitioned air duct,
wherein the control unit (20) is configured to control opening degrees of the plurality of second air doors (80).

5. The air outlet device (110) for an air-conditioning system of a vehicle (100), according to claim 4, wherein each partitioned air duct is configured to correspond to first air doors (11) in a certain region, wherein when the unblocked region is one of a plurality of unblocked regions of the air outlet assembly (10), the control unit (20) is further configured to obtain a target air outlet temperature of each of the unblocked regions, and control the opening degree of the second air door (80) in the partitioned air duct corresponding to each of the unblocked regions according to the target air outlet temperature of each of the unblocked regions.

6. A vehicle (100), comprising the air outlet device (110) for an air-conditioning system of a vehicle (100), according to any one of claims 1 to 5.

7. An air outlet method for an air-conditioning system of a vehicle (100), wherein an air outlet assembly (10) is disposed at air vents of the air-conditioning system, the air outlet assembly (10) comprises a plurality of first air doors (11) and a plurality of driving components (12), the plurality of driving components (12) are respectively connected to the plurality of first air doors (11), and each of the driving components (12) is configured to drive a corresponding first air door (11); and the air outlet method comprises the following step:
controlling (S1) the plurality of driving components (12) to drive the plurality of first air doors (11) to open or close independently;
**characterized in that** the controlling (S1) the plurality of driving components (12) comprises:
detecting positions of a plurality of in-vehicle display terminals (A, B, C) of the vehicle (100), the plurality of in-vehicle display terminals (A, B, C) being disposed in front of the air outlet assembly (10); and
controlling the plurality of driving components (12) according to the positions of the plurality of in-vehicle display terminals (A, B, C) and rotation states of the plurality of in-vehicle display terminals (A, B, C); and
**in that** the controlling the plurality of driving components (12) according to the positions of the plurality of in-vehicle display terminals (A, B, C) and rotation states of the plurality of in-vehicle display terminals (A, B, C) comprises:
determining a blocked region of the air outlet assembly (10), wherein the blocked region is an air outlet region of the air outlet assembly (10) that is blocked by an in-vehicle display terminal (A, B, C), from which the air outlet assembly (10) cannot let out air and an unblocked region of the air outlet assembly (10), wherein the unblocked region is an air outlet region of the air outlet assembly (10) that is not blocked by an in-vehicle display terminal (A, B, C), from which the air outlet assembly (10) can let out air according to the positions of the plurality of in-vehicle display terminals (A, B, C) and the rotation states of the plurality of in-vehicle display terminals (A, B, C); and
controlling first air doors among the plurality of first air doors (11) in the blocked region to close and first air doors among the plurality of first air doors (11) in the unblocked region to open.

8. The air outlet method for an air-conditioning system of a vehicle (100), according to claim 7, wherein
the controlling the plurality of driving components (12) according to the positions of the plurality of
in-vehicle display terminals (A, B, C) and rotation states of the plurality of in-vehicle display terminal (A, B, C) comprises:
controlling first air doors among the plurality of first air doors (11) in the blocked region and first air doors among the plurality of first air doors (11) in the unblocked region to open, and controlling a corresponding in-vehicle display terminal among the plurality of in-vehicle display terminals (A, B, C) in the blocked region to rotate, to change an air outlet direction.

9. The air outlet method for an air-conditioning system of a vehicle (100), according to claim 7 or 8, further comprising:
receiving a user instruction, and controlling at least one of the first air doors (11) in the blocked region to open according to the user instruction.

10. The air outlet method for an air-conditioning system of a vehicle (100), according to any one of claims 7 to 9, wherein the air-conditioning system comprises an air duct (40), an evaporator (50), and a warm box (60), the evaporator (50) is configured to generate cold air, and the warm box (60) is configured to generate warm air; a baffle (70) is disposed in the air duct (40), and is disposed along a flow direction of air in the air duct (40), to divide the air duct (40) into a plurality of partitioned air ducts; and a plurality of second air doors (80) are disposed between the evaporator (50) and the warm box (60), the plurality of second air doors (80) are respectively disposed in the plurality of partitioned air ducts, and each of the second air doors (80) is configured to control a flow rate of cold air in the corresponding partitioned air duct; and the air outlet method further comprises:
controlling opening degrees of the plurality of second air doors (80).

11. The air outlet method for an air-conditioning system of a vehicle (100), according to claim 10,
wherein each partitioned air duct corresponds to first air doors (80) in a certain region, wherein when the unblocked region is one of a plurality unblocked regions of the air outlet assembly (10), the controlling opening degrees of the plurality of second air doors (80) comprises:
obtaining a target air outlet temperature of each of the unblocked regions; and
controlling the opening degree of the second air door (80) in the partitioned air duct corresponding to each of the unblocked regions according to the target air outlet temperature of each of the unblocked regions.

## Patentansprüche

1. Luftauslassvorrichtung (110) für eine Klimaanlage eines Fahrzeugs (100), umfassend:
eine Luftauslassbaugruppe (10), die so konfiguriert ist, dass sie an Lüftungsöffnungen der Klimaanlage angeordnet werden kann, wobei die Luftauslassbaugruppe (10) eine Vielzahl von ersten Lufttüren (11) und eine Vielzahl von Antriebskomponenten (12) umfasst, wobei die Vielzahl von Antriebskomponenten (12) jeweils mit der Vielzahl von ersten Lufttüren (11) verbunden ist und jede der Antriebskomponenten (12) so konfiguriert ist, dass sie die entsprechende erste Lufttür (11) antreibt;
eine Steuereinheit (20), wobei die Steuereinheit (20) mit der Vielzahl von Antriebskomponenten (12) verbunden ist und so konfiguriert ist, dass sie die Vielzahl von Antriebskomponenten (12) dazu steuert, die Vielzahl von ersten Lufttüren (11) so anzutreiben, dass sie sich unabhängig öffnen oder schließen;
**dadurch gekennzeichnet, dass** die Luftauslassvorrichtung (110) ferner Folgendes umfasst:
eine Positionserfassungseinheit (30), wobei die Positionserfassungseinheit (30) dazu konfiguriert ist, Positionen einer Vielzahl von fahrzeuginternen Anzeigeterminals (A, B, C) des Fahrzeugs (100) zu erfassen, wobei die Vielzahl von fahrzeuginternen Anzeigeterminals (A, B, C) so konfiguriert ist, dass sie vor der Luftauslassbaugruppe (10) angeordnet werden kann,
**dadurch, dass** die Steuereinheit (20) so konfiguriert ist, dass sie die Vielzahl von Antriebskomponenten (12) gemäß den Positionen der Vielzahl von fahrzeuginternen Anzeigeterminals (A, B, C) und gemäß den Drehzuständen der Vielzahl von fahrzeuginternen Anzeigeterminals (A, B, C) steuert; und
**dadurch, dass** die Steuereinheit (20) ferner so konfiguriert ist, dass sie einen blockierten Bereich der Luftauslassbaugruppe (10) bestimmt, wobei der blockierte Bereich ein Luftauslassbereich der Luftauslassbaugruppe (10) ist, der durch ein fahrzeuginternes Anzeigeterminal (A, B, C) blockiert ist, aus dem die Luftauslassbaugruppe (10) keine Luft ablassen kann, und einen nicht blockierten Bereich der Luftauslassbaugruppe (10), wobei der nicht blockierte Bereich ein Luftauslassbereich der Luftauslassbaugruppe (10) ist, der nicht durch ein fahrzeuginternes Anzeigeterminal (A, B, C) blockiert ist, aus dem die Luftauslassbaugruppe (10) Luft ablassen kann gemäß den Positionen der Vielzahl von fahrzeuginternen Anzeigeterminals (A, B, C) und gemäß den Drehzuständen der Vielzahl von fahrzeuginternen Anzeigeterminals (A, B, C), und dass sie erste Lufttüren aus der Vielzahl von ersten Lufttüren (11) in dem blockierten Bereich zum Schließen und erste Lufttüren aus der Vielzahl von ersten Lufttüren (11) in dem nicht blockierten Bereich zum Öffnen steuert.

2. Luftauslassvorrichtung (110) für eine Klimaanlage eines Fahrzeugs (100) nach Anspruch 1, wobei die Steuereinheit (20) ferner so konfiguriert ist, dass sie erste Lufttüren aus der Vielzahl von ersten Lufttüren (11) in dem blockierten Bereich und erste Lufttüren aus der Vielzahl von ersten Lufttüren (11) in dem nicht blockierten Bereich zum Öffnen steuert, und dass sie ein entsprechendes fahrzeuginternes Anzeigeterminal unter der Vielzahl von fahrzeuginternen Anzeigeterminals (A, B, C) in dem blockierten Bereich zum Drehen steuert, um eine Luftauslassrichtung zu ändern.

3. Luftauslassvorrichtung (110) für eine Klimaanlage eines Fahrzeugs (100) nach Anspruch 1 oder 2, wobei die Steuereinheit (20) ferner so konfiguriert ist, dass sie eine Benutzeranweisung empfängt und mindestens eine der ersten Lufttüren (11) in dem blockierten Bereich so steuert, dass sie sich gemäß der Benutzeranweisung öffnet.

4. Luftauslassvorrichtung (110) für eine Klimaanlage eines Fahrzeugs (100) nach einem der vorherigen Ansprüche, ferner umfassend:
ein Leitblech (70), das dazu konfiguriert ist, in einem Luftkanal (40) der Klimaanlage angeordnet zu werden, wobei das Leitblech (70) so konfiguriert ist, dass es entlang einer Strömungsrichtung der Luft in dem Luftkanal (40) angeordnet ist, um den Luftkanal (40) in eine Vielzahl von unterteilten Luftkanälen zu unterteilen; und
eine Vielzahl zweiter Lufttüren (80), die so konfiguriert sind, dass sie zwischen einem Verdampfer (50) und einer Heizeinrichtung (60) der Klimaanlage angeordnet werden können, wobei der Verdampfer (50) zur Erzeugung kalter Luft konfiguriert ist und die Heizeinrichtung (60) zur Erzeugung warmer Luft konfiguriert ist, wobei die Vielzahl von zweiten Lufttüren (80) so konfiguriert ist, dass sie jeweils in der Vielzahl von unterteilten Luftkanälen angeordnet werden können, und jede der zweiten Lufttüren (80) so konfiguriert ist, dass sie eine Kaltluftströmungsrate in dem entsprechenden unterteilten Luftkanal steuert,
wobei die Steuereinheit (20) so konfiguriert ist, dass sie die Öffnungsgrade der Vielzahl von zweiten Lufttüren (80) steuert.

5. Luftauslassvorrichtung (110) für eine Klimaanlage eines Fahrzeugs (100) nach Anspruch 4, wobei jeder unterteilte Luftkanal so konfiguriert ist, dass er ersten Lufttüren (11) in einem bestimmten Bereich entspricht, wobei, wenn der nicht blockierte Bereich einer von einer Vielzahl von nicht blockierten Bereichen der Luftauslassanordnung (10) ist, die Steuereinheit (20) ferner so konfiguriert ist, dass sie eine Soll-Luftauslasstemperatur für jeden der nicht blockierten Bereiche erhält und den Öffnungsgrad der zweiten Lufttür (80) in dem unterteilten Luftkanal entsprechend jedem der nicht blockierten Bereiche gemäß der Zielluftauslasstemperatur jedes der nicht blockierten Bereiche steuert.

6. Fahrzeug (100) mit der Luftauslassvorrichtung (110) für eine Klimaanlage eines Fahrzeugs (100) nach einem der Ansprüche 1 bis 5.

7. Luftauslassverfahren für eine Klimaanlage eines Fahrzeugs (100), wobei eine Luftauslassbaugruppe (10) an Lüftungsöffnungen der Klimaanlage angeordnet ist, wobei die Luftauslassbaugruppe (10) eine Vielzahl von ersten Lufttüren (11) und eine Vielzahl von Antriebskomponenten (12) umfasst, wobei die Vielzahl von Antriebskomponenten (12) jeweils mit der Vielzahl von ersten Lufttüren (11) verbunden ist und jede der Antriebskomponenten (12) so konfiguriert ist, dass sie eine entsprechende erste Lufttür (11) antreibt, und wobei das Luftauslassverfahren den folgenden Schritt umfasst:
Steuern (S1) der Vielzahl von Antriebskomponenten (12) dazu, die Vielzahl von ersten Lufttüren (11) so anzutreiben, dass sie sich unabhängig öffnen oder schließen;
**dadurch gekennzeichnet, dass** das Steuern (S1) der Vielzahl von Antriebskomponenten (12) Folgendes umfasst:
Erfassen von Positionen einer Vielzahl von fahrzeuginternen Anzeigeterminals (A, B, C) des Fahrzeugs (100), wobei die Vielzahl von fahrzeuginternen Anzeigeterminals (A, B, C) vor der Luftauslassbaugruppe (10) angeordnet ist; und
Steuern der Vielzahl von Antriebskomponenten (12) gemäß den Positionen der Vielzahl von fahrzeuginternen Anzeigeterminals (A, B, C) und gemäß den Drehzuständen der Vielzahl von fahrzeuginternen Anzeigeterminals (A, B, C); und
**dadurch, dass** das Steuern der Vielzahl von Antriebskomponenten (12) gemäß den Positionen der Vielzahl von fahrzeuginternen Anzeigeterminals (A, B, C) und gemäß den Drehzuständen der Vielzahl von fahrzeuginternen Anzeigeterminals (A, B, C) Folgendes umfasst:
Bestimmen eines blockierten Bereichs der Luftauslassbaugruppe (10), wobei der blockierte Bereich ein Luftauslassbereich der Luftauslassbaugruppe (10) ist, der durch ein fahrzeuginternes Anzeigeterminal (A, B, C) blockiert ist, aus dem die Luftauslassbaugruppe (10) keine Luft ablassen kann, und eines nicht blockierten Bereichs der Luftauslassbaugruppe (10), wobei der nicht blockierte Bereich ein Luftauslassbereich der Luftauslassbaugruppe (10) ist, der nicht durch ein fahrzeuginternes Anzeigeterminal (A, B, C) blockiert ist, aus dem die Luftauslassbaugruppe (10) Luft ablassen kann gemäß den Positionen der Vielzahl von fahrzeuginternen Anzeigeterminals (A, B, C) und gemäß den Drehzuständen der Vielzahl von fahrzeuginternen Anzeigeterminals (A, B, C); und
Steuern erster Lufttüren aus der Vielzahl von ersten Lufttüren (11) in dem blockierten Bereich zum Schließen und Steuern erster Lufttüren aus der Vielzahl von ersten Lufttüren (11) in dem nicht blockierten Bereich zum Öffnen.

8. Luftauslassverfahren für eine Klimaanlage eines Fahrzeugs (100) nach Anspruch 7, wobei das Steuern der Vielzahl von Antriebskomponenten (12) gemäß den Positionen der Vielzahl von fahrzeuginternen Anzeigeterminals (A, B, C) und gemäß den Drehzuständen der Vielzahl von fahrzeuginternen Anzeigeterminals (A, B, C) Folgendes umfasst:
Steuern von ersten Lufttüren aus der Vielzahl von ersten Lufttüren (11) in dem blockierten Bereich zum Schließen und von ersten Lufttüren aus der Vielzahl von ersten Lufttüren (11) in dem nicht blockierten Bereich zum Öffnen, und Steuern eines entsprechenden fahrzeuginternen Anzeigeterminals unter der Vielzahl von fahrzeuginternen Anzeigeterminals (A, B, C) in dem blockierten Bereich zum Drehen, um eine Luftauslassrichtung zu ändern.

9. Luftauslassverfahren für eine Klimaanlage eines Fahrzeugs (100) nach Anspruch 7 oder 8, das ferner Folgendes umfasst:
Empfangen einer Benutzeranweisung und Steuern mindestens einer der ersten Lufttüren (11) in dem blockierten Bereich, um sich gemäß der Benutzeranweisung zu öffnen.

10. Luftauslassverfahren für eine Klimaanlage eines Fahrzeugs (100) nach einem der Ansprüche 7 bis 9, wobei die Klimaanlage einen Luftkanal (40), einen Verdampfer (50) und eine Heizeinrichtung (60) umfasst, wobei der Verdampfer (50) zur Erzeugung kalter Luft konfiguriert ist und die Heizeinrichtung (60) zur Erzeugung warmer Luft konfiguriert ist; wobei ein Leitblech (70) in einem Luftkanal (40) angeordnet ist und entlang einer Strömungsrichtung der Luft in dem Luftkanal (40) angeordnet ist, um den Luftkanal (40) in eine Vielzahl von unterteilten Luftkanälen zu unterteilen; und wobei eine Vielzahl von zweiten Lufttüren (80) zwischen dem Verdampfer (50) und der Heizeinrichtung (60) angeordnet ist, wobei die Vielzahl von zweiten Lufttüren (80) jeweils in der Vielzahl von unterteilten Luftkanälen angeordnet ist, und wobei jede der zweiten Lufttüren (80) so konfiguriert ist, dass sie eine Kaltluftströmungsrate in dem entsprechenden unterteilten Luftkanal steuert; und das Luftauslassverfahren ferner Folgendes umfasst:
Steuern der Öffnungsgrade der Vielzahl von zweiten Lufttüren (80).

11. Luftauslassverfahren für eine Klimaanlage eines Fahrzeugs (100) nach Anspruch 10, wobei jeder unterteilte Luftkanal ersten Lufttüren (11) in einem bestimmten Bereich entspricht, wobei, wenn der nicht blockierte Bereich einer von einer Vielzahl von nicht blockierten Bereichen der Luftauslassanordnung (10) ist, das Steuern der Öffnungsgrade der Vielzahl von zweiten Lufttüren (80) Folgendes umfasst:
Erhalten einer Soll-Luftauslasstemperatur für jeden der nicht blockierten Bereiche und Steuern des Öffnungsgrads der zweiten Lufttür (80) in dem unterteilten Luftkanal entsprechend jedem der nicht blockierten Bereiche gemäß der Zielluftauslasstemperatur jedes der nicht blockierten Bereiche.

## Revendications

1. Dispositif de sortie d'air (110) destiné à un système de climatisation d'un véhicule (100), comprenant :
un ensemble de sortie d'air (10) conçu pour être disposé au niveau de bouches d'air du système de climatisation, l'ensemble de sortie d'air (10) comprenant une pluralité de premières portes d'aération (11) et une pluralité de composants d'entraînement (12), la pluralité de composants d'entraînement (12) étant respectivement reliés à la pluralité de premières portes d'aération (11), et chacun des composants d'entraînement (12) étant conçu pour entraîner la première porte d'aération (11) correspondante ;
une unité de commande (20), l'unité de commande (20) étant reliée à la pluralité de composants d'entraînement (12), et étant conçue pour commander la pluralité de composants d'entraînement (12) de façon qu'ils amènent la pluralité de premières portes d'aération (11) à s'ouvrir ou à se fermer indépendamment ;
**caractérisé en ce que** le dispositif de sortie d'air (110) comprend en outre :
une unité de détection de position (30), l'unité de détection de position (30) étant conçue pour détecter la position d'une pluralité de terminaux d'affichage embarqués (A, B, C) du véhicule (100), la pluralité de terminaux d'affichage embarqués (A, B, C) étant conçus pour être disposés devant l'ensemble de sortie d'air (10),
**en ce que** l'unité de commande (20) est conçue pour commander la pluralité de composants d'entraînement (12) conformément à la position de la pluralité de terminaux d'affichage embarqués (A, B, C) et à l'état de rotation de la pluralité de terminaux d'affichage embarqués (A, B, C), et
**en ce que** l'unité de commande (20) est conçue en outre pour déterminer une région bloquée de l'ensemble de sortie d'air (10), ladite région bloquée étant une région de sortie d'air de l'ensemble de sortie d'air (10) qui est bloquée par un terminal d'affichage embarqué (A, B, C) et par laquelle l'ensemble de sortie d'air (10) ne peut laisser sortir de l'air, et une région non bloquée de l'ensemble de sortie d'air (10), ladite région non bloquée étant une région de sortie d'air de l'ensemble de sortie d'air (10) qui n'est pas bloquée par un terminal d'affichage embarqué (A, B, C) et par laquelle l'ensemble de sortie d'air (10) peut laisser sortir de l'air conformément à la position de la pluralité de terminaux d'affichage embarqués (A, B, C) et à l'état de rotation de la pluralité de terminaux d'affichage embarqués (A, B, C), et conçue pour commander des premières portes d'aération parmi la pluralité de premières portes d'aération (11) de la région bloquée de façon qu'elles se ferment et des premières portes d'aération parmi la pluralité de premières portes d'aération (11) de la région non bloquée de façon qu'elles s'ouvrent.

2. Dispositif de sortie d'air (110) destiné à un système de climatisation d'un véhicule (100) selon la revendication 1, dans lequel l'unité de commande (20) est conçue en outre pour commander des premières portes d'aération parmi la pluralité de premières portes d'aération (11) de la région bloquée et des premières portes d'aération parmi la pluralité de premières portes d'aération (11) de la région non bloquée de façon qu'elles s'ouvrent, et pour commander un terminal d'affichage embarqué correspondant parmi la pluralité de terminaux d'affichage embarqués (A, B, C) de la région bloquée de façon qu'il subisse une rotation, afin de modifier la direction de la sortie d'air.

3. Dispositif de sortie d'air (110) destiné à un système de climatisation d'un véhicule (100) selon la revendication 1 ou 2, dans lequel l'unité de commande (20) est conçue en outre pour recevoir une instruction de l'utilisateur, et pour commander au moins une des premières portes d'aération (11) de la région bloquée de façon qu'elle s'ouvre conformément à l'instruction de l'utilisateur.

4. Dispositif de sortie d'air (110) destiné à un système de climatisation d'un véhicule (100) selon l'une quelconque des revendications précédentes, comprenant en outre :
une chicane (70) conçue pour être disposée dans un conduit d'air (40) du système de climatisation, la chicane (70) étant conçue pour être disposée dans le sens de l'écoulement d'air dans le conduit d'air (40) afin de diviser le conduit d'air (40) en une pluralité de portions de conduit d'air, et
une pluralité de deuxièmes portes d'aération (80) conçues pour être disposées entre un évaporateur (50) et un organe de chauffage (60) du système de climatisation, l'évaporateur (50) étant conçu pour générer de l'air froid, et l'organe de chauffage (60) étant conçu pour générer de l'air chaud, la pluralité de deuxièmes portes d'aération (80) étant conçues pour être disposées respectivement dans la pluralité de portions de conduit d'air, et chacune des deuxièmes portes d'aération (80) étant conçue pour commander le débit d'air froid dans la portion de conduit d'air correspondante ;
ladite unité de commande (20) étant conçue pour commander le degré d'ouverture de la pluralité de deuxièmes portes d'aération (80).

5. Dispositif de sortie d'air (110) destiné à un système de climatisation d'un véhicule (100) selon la revendication 4, dans lequel chaque portion de conduit d'air est conçue pour correspondre à des premières portes d'aération (11) dans une certaine région ; lorsque la région non bloquée est une région d'une pluralité de régions non bloquées de l'ensemble de sortie d'air (10), l'unité de commande (20) est conçue en outre pour obtenir une température cible de sortie d'air de chacune des régions non bloquées, et pour commander le degré d'ouverture de la deuxième porte d'aération (80) de la portion de conduit d'air correspondant à chacune des régions non bloquées conformément à la température cible de sortie d'air de chacune des régions non bloquées.

6. Véhicule (100), comprenant le dispositif de sortie d'air (110) destiné à un système de climatisation d'un véhicule (100) selon l'une quelconque des revendications 1 à 5.

7. Procédé de sortie d'air destiné à un système de climatisation d'un véhicule (100), dans lequel un ensemble de sortie d'air (10) est disposé au niveau de bouches d'air du système de climatisation, l'ensemble de sortie d'air (10) comprend une pluralité de premières portes d'aération (11) et une pluralité de composants d'entraînement (12), la pluralité de composants d'entraînement (12) sont respectivement reliés à la pluralité de premières portes d'aération (11), et chacun des composants d'entraînement (12) est conçu pour entraîner une première porte d'aération (11) correspondante ; ledit procédé de sortie d'air comprenant l'étape suivante :
la commande (S1) de la pluralité de composants d'entraînement (12) de façon qu'ils amènent la pluralité de premières portes d'aération (11) à s'ouvrir ou à se fermer indépendamment ;
**caractérisé en ce que** la commande (S1) de la pluralité de composants d'entraînement (12) comprend :
la détection de la position d'une pluralité de terminaux d'affichage embarqués (A, B, C) du véhicule (100), la pluralité de terminaux d'affichage embarqués (A, B, C) étant disposés devant l'ensemble de sortie d'air (10), et
la commande de la pluralité de composants d'entraînement (12) conformément à la position de la pluralité de terminaux d'affichage embarqués (A, B, C) et à l'état de rotation de la pluralité de terminaux d'affichage embarqués (A, B, C) ; et
**en ce que** la commande de la pluralité de composants d'entraînement (12) conformément à la position de la pluralité de terminaux d'affichage embarqués (A, B, C) et à l'état de rotation de la pluralité de terminaux d'affichage embarqués (A, B, C) comprend :
la détermination d'une région bloquée de l'ensemble de sortie d'air (10), ladite région bloquée étant une région de sortie d'air de l'ensemble de sortie d'air (10) qui est bloquée par un terminal d'affichage embarqué (A, B, C) et par laquelle l'ensemble de sortie d'air (10) ne peut laisser sortir de l'air, et d'une région non bloquée de l'ensemble de sortie d'air (10), ladite région non bloquée étant une région de sortie d'air de l'ensemble de sortie d'air (10) qui n'est pas bloquée par un terminal d'affichage embarqué (A, B, C) et par laquelle l'ensemble de sortie d'air (10) peut laisser sortir de l'air conformément à la position de la pluralité de terminaux d'affichage embarqués (A, B, C) et à l'état de rotation de la pluralité de terminaux d'affichage embarqués (A, B, C), et
la commande de premières portes d'aération parmi la pluralité de premières portes d'aération (11) de la région bloquée de façon qu'elles se ferment et de premières portes d'aération parmi la pluralité de premières portes d'aération (11) de la région non bloquée de façon qu'elles s'ouvrent.

8. Procédé de sortie d'air destiné à un système de climatisation d'un véhicule (100) selon la revendication 7, dans lequel la commande de la pluralité de composants d'entraînement (12) conformément à la position de la pluralité de terminaux d'affichage embarqués (A, B, C) et à l'état de rotation de la pluralité de terminaux d'affichage embarqués (A, B, C) comprend :
la commande de premières portes d'aération parmi la pluralité de premières portes d'aération (11) de la région bloquée et de premières portes d'aération parmi la pluralité de premières portes d'aération (11) de la région non bloquée de façon qu'elles s'ouvrent, et la commande d'un terminal d'affichage embarqué correspondant parmi la pluralité de terminaux d'affichage embarqués (A, B, C) de la région bloquée de façon qu'il subisse une rotation, afin de modifier la direction de la sortie d'air.

9. Procédé de sortie d'air destiné à un système de climatisation d'un véhicule (100) selon la revendication 7 ou 8, comprenant en outre :
la réception d'une instruction de l'utilisateur, et la commande d'au moins une des premières portes d'aération (11) de la région bloquée de façon qu'elle s'ouvre conformément à l'instruction de l'utilisateur.

10. Procédé de sortie d'air destiné à un système de climatisation d'un véhicule (100) selon l'une quelconque des revendications 7 à 9, dans lequel le système de climatisation comprend un conduit d'air (40), un évaporateur (50) et un organe de chauffage (60), l'évaporateur (50) est conçu pour générer de l'air froid, et l'organe de chauffage (60) est conçu pour générer de l'air chaud ; une chicane (70) est disposée dans le conduit d'air (40) et est disposée dans le sens de l'écoulement d'air dans ledit conduit d'air (40), pour diviser le conduit d'air (40) en une pluralité de portions de conduit d'air; et une pluralité de deuxièmes portes d'aération (80) sont disposées entre l'évaporateur (50) et l'organe de chauffage (60), la pluralité de deuxièmes portes d'aération (80) sont respectivement disposées dans la pluralité de portions de conduit d'air, et chacune des deuxièmes portes d'aération (80) est conçue pour commander le débit d'air froid dans la portion correspondante de conduit d'air ; ledit procédé de sortie d'air comprenant en outre :
la commande du degré d'ouverture de la pluralité de deuxièmes portes d'aération (80).

11. Procédé de sortie d'air destiné à un système de climatisation d'un véhicule (100) selon la revendication 10, dans lequel chaque portion de conduit d'air correspond à des premières portes d'aération (11) dans une certaine région ; lorsque la région non bloquée est une région d'une pluralité de régions non bloquées de l'ensemble de sortie d'air (10), la commande du degré d'ouverture de la pluralité de deuxième porte d'aération (80) comprend :
l'obtention d'une température cible de sortie d'air de chacune des régions non bloquées, et la commande du degré d'ouverture de la deuxième porte d'aération (80) de la portion de conduit d'air correspondant à chacune des régions non bloquées conformément à la température cible de sortie d'air de chacune des régions non bloquées.
